# EUROPÄISCHE PATENTSCHRIFT

(11) **EP 0 915 127 B1**
(45) Veröffentlichungstag und Bekanntmachung des Hinweises auf die Patenterteilung: **11.05.2005**
(21) Anmeldenummer: 98119457.4
(22) Anmeldetag: 15.10.1998
(51) Int. Cl.: C08J 9/00, C08J 9/14, C08L 25/04

(54) **Athermane Partikel enthaltende expandierbare Styrolpolymerisate**
Expandable styrenic polymer containing athermanous particles
Polymère styrénique expansible contenant des particules thermiquement isolantes

(30) Priorität: 12.11.1997 DE 19750019
(43) Veröffentlichungstag der Anmeldung: 12.05.1999
(73) Patentinhaber: BASF AKTIENGESELLSCHAFT, 67056 Ludwigshafen (DE)
(72) Erfinder: Glück, Guiscard Dr., 55129 Mainz (DE); Hahn, Klaus Dr., 67281 Kirchheim (DE); Naegele, Dieter Dr., 67550 Worms (DE)

(56) Entgegenhaltungen:
- DE-A- 19 530 548
- DE-C- 19 541 725
- DE-U- 29 616 362
- GB-A- 1 012 277
- US-A- 3 660 303

## Beschreibung

Die Erfindung betrifft teilchenförmige, athermane Partikel enthaltende expandierbare Styrolpolymerisate (EPS-Partikel), ihre Herstellung sowie daraus hergestellte Schaumstoffe.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten EPS-Partikel und das nachfolgende Verschweißen der so hergestellten Schaumpartikel zu Formkörpern. Ein wesentliches Einsatzgebiet ist die Wärmedämmung im Bauwesen.

Die zur Wärmedämmung eingesetzten Schaumstoffplatten aus EPS-Partikeln haben zumeist Dichten von mindestens 30 g/l, da bei diesen Dichten die Wärmeleitfähigkeit des Polystyrolpartikelschaums ein Minimum aufweist. Aus Gründen der Materialeinsparung wäre es wünschenswert, Schaumstoffplatten mit geringeren Dichten, insbesondere ≤ 15 g/l, zur Wärmeisolation einzusetzen. Die Herstellung derartiger Schaumstoffe ist technisch kein Problem. Schaumstoffplatten mit geringer Dichte weisen jedoch eine drastisch verschlechterte Wärmedämmfähigkeit auf, so daß sie die Anforderungen der Wärmeleitklasse 035 (DIN 18 164, Teil 1) nicht erfüllen.

Nun ist es bekannt, die Wärmeleitfähigkeit von Schaumstoffen durch Einbau von athermanen Materialien, wie Ruß, Metalloxiden, Metallpulver oder Farbstoffpigmenten, zu vermindern.

So werden in EP-A 372 343 Polystyrolschaumstoffe beschrieben, die 1 bis 25 Gew.-% Ruß enthalten. Die dort beschriebenen Polystyrolschaumstoffe werden vorwiegend nach dem Extrusionsverfahren hergestellt und weisen vorzugsweise eine Dichte von 32 - 40 g/l, wie sie für diese Schäume typisch ist, auf.

Die PCT-Patentanmeldung EP 97/02458 betrifft Graphitpartikel enthaltende EPS-Partikel und daraus hergestellte Schaumstoffe mit verminderter Wärmeleitfähigkeit.

In der DE-U 296 16 362 sind Schaumstoffplatten für die Fußbodendämmung mit verbesserter Wärmeisolierwirkung beschrieben, die Ruß- oder Graphitpartikel enthalten.

In der DE-C 195 41 725 sind expandierbare Styrolpolymerisate mit verminderter Wasseraufnahmefähigkeit beschrieben, die als Beschichtung eine Mischung aus Glycerintristearat, einem hydrophoben Silikat sowie gegebenenfalls Zinkstearat und Glycerinmonostearat enthalten.

Es ist eine allgemeine Tatsache, daß die Wärmeleitfähigkeit ansteigt, wenn EPS-Schaumstoffe feucht sind, und insbesondere, wenn sie in Wasser gelagert wurden oder Luftfeuchtigkeit aufgenommen haben. Aus diesem Grund müssen zur Ermittlung der Wärmeleitklasse bei EPS-Schaumstoffen auf die im trockenen Zustand gemessene Wärmeleitfähigkeit 5 % aufgeschlagen werden, d. h., damit ein EPS-Schaumstoff die Wärmeleitklasse 035 erreicht, darf er im trockenen Zustand eine Wärmeleitfähigkeit von höchstens 33,8 mW/m.K aufweisen.

Der Erfindung lag die Aufgabe zugrunde, athermane Partikel enthaltende EPS-Partikel bereitzustellen, bei denen dies nicht notwendig ist.

Die Aufgabe wurde gelöst durch teilchenförmige, expandierbare Styrolpolymerisate, die athermane Partikel in homogener Verteilung enthalten und mit 0,001 bis 0,5 Gew.-% eines Hydrophobierungsmittels, welches Oberhalb von 10°C schmilzt und eine mittlere Teilchengröße von weniger als 100 µm aufweist, beschichtet sind, wobei das Hydrophobierungsmittel ein Paraffinwachs mit 10 bis 30 C-Atomen in der Kohlenstoffkette, ein Umsetzungsprodukt von einem N-Methylolamin und einem Fettsäurederivat oder ein Polyfluoralkyl(meth)acrylat ist.

Die erfindungsgemäßen expandierbaren Styrolpolymerisate enthalten als Polymermatrix insbesondere Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol. Auch Blends aus Polystyrol und anderen Polymeren, insbesondere mit Kautschuk und Polyphenylenether sind möglich.

Die Styrolpolymerisate können die üblichen und bekannten Hilfsmittel und Zusatzstoffe enthalten, beispielsweise Flammschutzmittel, Keimbildner, UV-Stabilisatoren, Kettenüberträger, Treibmittel, Weichmacher und Antioxidantien.

Geeignete athermane Partikel sind Metallpulver, wie Aluminiumpulver, Metalloxide, wie Eisenoxid und Aluminiumoxid, Farbpigmente, sowie insbesondere Kohlenstoffpartikel, wie Ruß und Graphit. Geeignet sind alle üblichen Rußsorten, wobei Flammruß mit einer Partikelgröße von 80 bis 120 nm bevorzugt ist. Ruß wird vorzugsweise in Mengen von 2 bis 10 Gew.-% eingesetzt. Besonders gut geeignet ist aber Graphit, wobei eine mittlere Partikelgröße von 1 bis 50 µm, insbesondere von 2,5 bis 12 µm, ein Schüttgewicht von 100 bis 500 g/l und eine spezifische Oberfläche von 5 bis 20 m²/g bevorzugt sind. Es kann Naturgraphit oder gemahlener synthetischer Graphit eingesetzt werden. Die Graphitpartikel sind im Styrolpolymerisat in Mengen von 0,05 bis 25 Gew.-%, insbesondere von 0,5 bis 8 Gew.-% enthalten.

Ein Problem bei der Verwendung von Graphitpartikeln besteht in der leichten Brennbarkeit der Graphitpartikel enthaltenden Polystyrolpartikelschaumstoffe. So war es bislang nicht möglich, mit Graphit enthaltenden Polystyrolschaumstoffen die für den Einsatz im Bauwesen notwendigen Brandtests (B1 und B2 nach DIN 4102) zu bestehen.

Zur Behebung dieses Mangels werden in einer bevorzugten Ausführungsform der Erfindung den expandierbaren Styrolpolymerisaten Flammschutzmittel, insbesondere solche auf Basis organischer Bromverbindungen, zugesetzt. Die organischen Bromverbindungen sollen einen Bromgehalt von ≥ 70 Gew.-% aufweisen. Überraschenderweise führt diese Menge an Flammschutzmitteln zu keinerlei Beeinträchtigung der mechanischen Kennwerte der athermane Partikel enthaltenden Polystyrolpartikelschaumstoffe. Insbesondere geeignet sind aliphatische, cycloaliphatische und aromatische Bromverbindungen, wie Hexabromcyclododecan, Pentabrommonochlorcyclohexan, Pentabromphenylallylether.

Die Wirkung der bromhaltigen Flammschutzmittel wird durch Zusatz von C-C- oder O-O-labilen organischen Verbindungen erheblich verbessert. Beispiele geeigneter Flammschutzsynergisten sind Dicumyl und Dicumylperoxid. Eine bevorzugte Kombination besteht aus 0,6 bis 5 Gew.-% organischer Bromverbindung und 0,1 bis 1,0 Gew.-% der C-C- oder O-O-labilen organischen Verbindung.

Die Einarbeitung der athermanen Partikel in die EPS-Partikel kann nach unterschiedlichen Verfahren erfolgen.

Bei einer bevorzugten Ausführungsform vermischt man die athermanen Partikel mit einer Schmelze des Styrolpolymerisates, vorzugsweise in einem Extruder. Dabei wird gleichzeitig das Treibmittel in die Schmelze zudosiert. Man kann die athermanen Partikel auch in eine Schmelze von treibmittelhaltigem Styrolpolymerisat einarbeiten, wobei zweckmäßigerweise ausgesiebte Randfraktionen eines Perlspektrums von bei einer Suspensionspolymerisation entstandenen treibmittelhaltigen Polystyrolperlen eingesetzt werden. Die Treibmittel und athermane Partikel enthaltende Polystyrolschmelze wird ausgepreßt und zu treibmittelhaltigem Granulat zerkleinert. Da insbesondere Graphit stark nukleierend wirkt, sollte nach dem Auspressen unter Druck rasch abgekühlt werden, um ein Aufschäumen zu vermeiden. Man führt daher zweckmäßigerweise eine Unterwassergranulierung unter Druck durch.

Es ist auch möglich, den athermane Partikel enthaltenden Styrolpolymerisaten das Treibmittel in einem gesonderten Verfahrensschritt zuzusetzen. Hierbei werden die Granulate dann vorzugsweise in wäßriger Suspension mit dem Treibmittel imprägniert.

In allen drei Fällen kann man die feinteiligen athermanen Partikel direkt der Polystyrolschmelze zusetzen. Man kann die Partikel auch in Form eines Konzentrats in Polystyrol der Schmelze zusetzen. Bevorzugt werden aber Polystyrolgranulat und athermanen Partikel zusammen in einen Extruder eingegeben, das Polystyrol aufgeschmolzen und mit den Partikeln vermischt.

Es ist grundsätzlich auch möglich, die athermanen Partikel bereits im Verlauf der Suspensionspolymerisation zu inkorporieren. Sie können hierbei vor der Suspendierung dem monomeren Styrol zugesetzt oder im Verlaufe, bevorzugt während der ersten Hälfte des Polymerisationszyklus, dem Reaktionsansatz zugefügt werden. Das Treibmittel wird bevorzugt im Verlaufe der Polymerisation zugegeben, es kann jedoch auch hinterher dem Styrolpolymerisat einverleibt werden. Dabei hat es sich gezeigt, daß es für die Stabilität der Suspension günstig ist, wenn bei Beginn der Suspensionspolymerisation eine Lösung von Polystyrol (bzw. einem entsprechenden Styrolcopolymerisat) in Styrol (bzw. der Mischung von Styrol mit Comonomeren) vorliegt. Bevorzugt geht man dabei von einer 0,5 bis 30, insbesondere 5 bis 20 gew.-%igen Lösung von Polystyrol in Styrol aus. Man kann dabei frisches Polystyrol in Monomeren auflösen, zweckmäßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden. In der Praxis haben derartige nicht verwertbare Randfraktionen Durchmesser von größer als 2,0 mm bzw. kleiner als 0,2 mm. Auch Polystyrol-Recyclat und Schaumpolystyrol-Recyclat können eingesetzt werden. Eine andere Möglichkeit besteht darin, daß man Styrol in Substanz bis zu einem Umsatz von 0,5 bis 70 % vorpolymerisiert und das Vorpolymerisat zusammen mit den athermanen Partikeln in der wässrigen Phase suspendiert und auspolymerisiert.

Das Treibmittel wird in den üblichen Mengen von etwa 3 - 10 Gew.-%, bezogen auf das Gewicht des Polymeren, zugesetzt. Als Treibmittel eingesetzt werden üblicherweise aliphatische Kohlenwasserstoffe mit 3 bis 10, vorzugsweise 4 bis 6 Kohlenstoffatomen.

Die EPS-Partikel sind erfindungsgemäß mit 0,001 bis 0,5, vorzugsweise mit 0,01 bis 0,3 Gew.-%, jeweils bezogen auf Feststoff, eines Hydrophobierungsmittels beschichtet, welches oberhalb von 10°C schmilzt und eine Teilchengröße von weniger als 100 µm, insbesondere von weniger als 10 µm aufweist.

Erfindungsgemäße Hydrophobierungsmittel sind Paraffinwachse mit 10 bis 30 C-Atomen in der Kohlenstoffkette, die vorzugsweise einen Schmelzpunkt zwischen 10 und 70°C, insbesondere zwischen 25 und 60°C, aufweisen. Derartige Paraffinwachse sind beispielsweise in den BASF-Handelsprodukten RAMASIT KGT, PERSISTOL E und PERSISTOL HP sowie in AVERSIN HY-N von Henkel und CEROL ZN von Sandoz enthalten.

Eine andere Klasse erfindungsgemäßer Hydrophobierungsmittel sind harzartige Umsetzungsprodukte von einem N-Methylolamin mit einem Fettsäurederivat, z.B. einem Fettsäureamid, -amin oder -alkohol, wie sie z.B. in US-A 2 927 090 oder GB-A 475 170 beschrieben sind. Ihr Schmelzpunkt liegt im allgemeinen bei 50 bis 90°C. Derartige Harze sind z.B. in dem BASF-Handelsprodukt PERSISTOL HP und in ARCOPHOB EFM von Hoechst enthalten.

Auch Polyfluoralkyl(meth-)acrylate sind erfindungsgemäße Hydrophobierungsmittel, beispielsweise Polyperfluoroctylacrylat. Diese Substanz ist in dem BASF-Handelsprodukt PERSISTOL O und in OLEOPHOBOL C von Pfersee enthalten.

Die Herstellung der erfindungsgemäßen EPS-Partikel erfolgt vorzugsweise durch Beschichten mit einer wäßrigen Emulsion der Hydrophobierungsmittel. In dieser Emulsion sind die festen Hydrophobierungsmittel in einer Menge von 10 bis 80 Gew.-%, vorzugsweise von 15 bis 50 Gew.-% enthalten. Darüber hinaus enthält die wäßrige Emulsion vorzugsweise übliche Emulgatoren, z.B. ethoxyliertes Oleylamin in Mengen von 0,5 bis 5 Gew.-%, sowie Lösungsvermittler und andere übliche Zusatzstoffe.

Die wäßrige Emulsion des Hydrophobierungsmittels wird vorzugsweise auf die EPS-Partikel unmittelbar nach der Aufarbeitung und Trocknung aufgebracht und zwar zweckmäßigerweise zusammen mit anderen üblichen Beschichtungsmitteln, wie Antiverklebungsmitteln, z.B. Metallstearate und feinteilige Kieselsäure, sowie Mitteln zur Verkürzung der Entformzeit, wie Glycerinester und Hydroxycarbonsäureester.

Man kann die Hydrophobierungsmittel - insbesondere wenn sie in flüssiger Form oder als wässrige Lösung vorliegen - auch an porenhaltige Feststoffe, wie z.B. feinteilige Kieselsäure adsorbieren, vorzugsweise in Mengen von 5 bis 50 Gew.-%, und damit die Beschichtung vornehmen. Da durch die Beschichtung mit dem Hydrophobierungsmittel die Entflammbarkeit der Schaumstoffe heraufgesetzt werden kann, ist es in manchen Fällen zweckmäßig, zusammen mit dem Hydrophobierungsmittel auch noch weiteres Flammschutzmittel in Mengen von 0,01 bis 0,5 Gew.-%, bezogen auf EPS, aufzubringen. Es ist grundsätzlich auch möglich, die wäßrige Emulsion auf vorgeschäumte EPS-Partikel aufzubringen. In beiden Fällen erfolgt der Auftrag durch Besprühen oder vorzugsweise durch Auftrommeln in einem üblichen Trommelmischer.

Schließlich kann man das Hydrophobierungsmittel auch bei der Herstellung der EPS-Partikel durch Polymerisation von Styrol in wäßriger Suspension zusetzen.

Nach der Behandlung der EPS-Partikel mit den Hydrophobierungsmitteln werden die Partikel getrocknet. Das geschieht üblicherweise mit Luft bei Raumtemperatur oder leicht erhöhter Temperatur, die jedoch bei der Behandlung von unverschäumten Partikeln soweit unterhalb ihrer Erweichungstemperatur liegen muß, daß ein unbeabsichtigtes Aufschäumen und ein Entweichen des Treibmittel verhindert wird. Die EPS-Partikel weisen im allgemeinen eine mittlere Partikelgröße von 0,1 bis 3 mm, insbesondere von 0,3 bis 2,0 mm auf.

Die erfindungsgemäßen EPS-Partikel können zu Polystyrolschaumstoffen mit Dichten von 5 - 35 g/l, bevorzugt von 8 bis 25 g/l und insbesondere von 10 - 15 g/l, verarbeitet werden.

Die Verschäumung der Treibmittel enthaltenden EPS-Partikel zu Schaumstoffen erfolgt üblicherweise ebenfalls nach den im Stand der Technik bekannten Verfahren, indem sie zunächst mit Wasserdampf in offenen oder geschlossenen Vorschäumern vorgeschäumt werden. Die vorgeschäumten Perlen werden danach in gasdurchlässigen Formen mittels Wasserdampf zu Formteilen oder Platten verschweißt. Die expandierten Polystyrolpartikel weisen im allgemeinen eine mittlere Partikelgröße von 1 bis 10 mm, insbesondere von 2 bis 8 mm auf.

Weitere Angaben zu den üblichen Polymerisations-, Imprägnier-, und Schäumverfahren finden sich beispielsweise im Kunststoffhandbuch, Band 5, Polystyrol, herausgegeben von R. Vieweg und G. Daumiller, Carl-Hanser-Verlag München, 1969.

Überraschenderweise kommt es durch die erfindungsgemäße Behandlung mit den Hydrophobierungsmitteln zu keinerlei Nachteilen bei den mechanischen und den Verarbeitungseigenschaften der Styrolpolymerisate. Es treten auch keine Erhöhungen der Entformzeiten auf.

Hydrophobierungsmittel werden normalerweise angewandt um flächige Materialien, wie Textilien, Leder oder Papier wasserabstoßend zu machen. Es war nicht zu erwarten, daß sie - auf expandierbare Partikel aufgebracht - nach deren Aufschäumen und Versintern zu einem Formteil dieses wasserundurchlässig machen können, und daß durch die Beschichtung die Verschweißung der expandierten Partikel nicht behindert wird.

Die aus den erfindungsgemäßen expandierbaren Styrolpolymerisaten hergestellten Schaumstoffe zeichnen sich durch eine hervorragende Wärmeisolierung aus. Dieser Effekt zeigt sich besonders deutlich bei niedrigen Dichten. Durch Feuchtigkeit und Lagerung der Schaumstoffe in Wasser wird der Effekt nicht beeinträchtigt.

Ein weiterer Gegenstand der Erfindung sind Polystyrolpartikelschaumstoffe mit einer Dichte von < 35 g/l, die in homogener Verteilung 0,05 bis 25 Gew.-% Kohlenstoffpartikel enthalten und mit 0,001 bis 0,5 Gew.-% des erfindungsgemäßen Hydrophobierungsmittels beschichtet sind, deren Wärmeleitfähigkeit soweit erniedrigt ist, daß sie den Anforderungen der Wärmeleitklasse 035 (nach DIN 18 164, Teil 1, Tabelle 4) genügen, und die vorzugsweise selbstverlöschend sind und den Brandtest B2 (nach DIN 4102) erfüllen.

Durch die Möglichkeit, bei gleicher Wärmeleitfähigkeit die Dichte der Styrolpolymerisate deutlich zu verringern, lassen sich Materialeinsparungen realisieren. Da im Vergleich mit herkömmlichen expandierbaren Styrolpolymerisaten die gleiche Wärmedämmung mit wesentlich geringeren Schüttdichten erreicht werden kann, können mit dem erfindungsgemäß hergestellten expandierbaren Polystyrolpartikeln dünnere Schaumstoffplatten eingesetzt werden, was eine Raumeinsparung ermöglicht.

Überraschenderweise lassen sich die erfindungsgemäßen expandierbaren Styrolpolymerisate völlig problemlos zu Schaumstoffen geringer Dichte verarbeiten. Es kommt weder zu Treibmittelverlusten noch zu Störungen der Zellstruktur der Schaumstoffe, obwohl der Fachmann annehmen mußte, daß die athermanen Partikel als Keimbildner wirken und zu einer unerwünschten Feinzelligkeit des Schaumes und schlechter Verschweißung führen würde. Außerdem lassen sich trotz des Zusatzes von athermanen Partikeln selbstverlöschende Schaumstoffe herstellen, die den Brandtest B2 und in den meisten Fällen auch B1 bestehen.

Die erfindungsgemäßen Schaumstoffe können zur Wärmedämmung von Gebäuden und Gebäudeteilen, zur thermischen Isolierung von Maschinen und Haushaltsgeräten sowie als Verpackungsmaterialien verwendet werden.

Die Erfindung soll an nachstehenden Beispielen näher erläutert werden. Die genannten Teile und Prozente beziehen sich auf das Gewicht.

### Beispiele:

### A. Herstellung von EPS durch Extrusion:

Zu aufgeschmolzenem Polystyrol mit einem mittleren Molekulargewicht (M_{w}) von 220000 und einem Gehalt von 2,1 % Hexabromcyclododecan und 0,42 % Dicumyl wurden in einem beheizten Zweischneckenextruder bei einer Massetemperatur von etwa 160°C 2 % Graphit sowie 5,0 % einer Mischung aus 80 % n-Pentan und 20 % iso-Pentan zudosiert. Die homogenisierte Mischung wurde bei einer Massetemperatur von 180°C durch eine Düsenplatte von 0,8 mm Düsendurchmesser gepreßt. An die Düsenplatte war ein Unterwassergranulator angebaut. Mittels eines rotierenden Messers wurde bei 10 bar Druck die austretende Schmelze granuliert. Es wurden Perlen mit einem Durchmesser von 1,5 mm erhalten.

### B. Herstellung von EPS durch Polymerisation:

In 419 kg Styrol werden 21 kg Polystyrol (PS 158 K der BASF) gelöst und 8,5 kg pulverförmiges Graphit (Graphitwerk Kropfmühl AG, AF spez. 96/97) homogen suspendiert unter Beimischung von 0,21 kg Dibenzoylperoxid, 2,1 kg Dicumylperoxid sowie 2,9 kg Hexabromcyclododecan. Die organische Phase wird in 485 l vollentsalztes Wasser in einem druckfesten 1 m³ Rührkessel eingebracht. Die wäßrige Phase enthält 1,16 kg Natriumphyrophosphat und 2,15 kg Bittersalz. Das Reaktionsgemisch wird unter Rühren schnell auf 90°C erhitzt. Anschließend wird innerhalb von 4 h auf 125 °C erhitzt, wobei nach 2 h 5,8 kg Emulgator K 30/40 (Bayer AG) und nach circa 2,5 h 30 kg Pentan zugegeben werden. Schließlich wird bei einer Temperatur von 125°C auspolymerisiert. Es wurden Perlen mit einem mittleren Durchmesser von 1,5 mm erhalten.

### C. Vergleich

Zu Vergleichszwecken wurde ein handelsübliches EPS ohne Graphitpartikel (Styropor F 215 der BASF) parallel untersucht.

### D. Beschichtung:

### Versuche 1 bis 6

In einem Schaufelmischer mit einem Volumen von 40 l wurden 25 kg EPS (jeweils Produkte A, B und C mit den in Tabelle 1 angegebenen Beschichtungsmitteln 10 min. bei 25°C intensiv gemischt.

### Versuche 7 bis 12

Es wurde gearbeitet wie oben beschrieben, wobei aber die Hydrophobierungsmittel nicht als wäßrige Emulsion, sondern an feinteilige Kieselsäure adsorbiert eingesetzt wurden (Tabelle 2).

### E. Verarbeitung zu Formteilen:

Anschließend wurden die beschichteten Perlen in einem drucklosen Schäumkasten (System Rauscher) vorgeschäumt und nach 12 Stunden zu plattenförmigen Formteilen (Raumgewicht 15 kg/m³) verarbeitet.

Tabellen 1 und 2 zeigen die Zusammensetzung der Beschichtungen und die gemessenen Eigenschaften der Platten. Die Wasseraufnahme wurde nach DIN 53 433 gemessen, die Wasserdichtigkeit nach folgender Methode: Auf eine Schaumstoffplatte einer Dicke von 100 mm wurde ein Rohr von 100 mm Durchmesser geklebt und mit einer Wassersäule von 100 mm Höhe gefüllt.

Nach 24 Stunden wurde geprüft, ob auf der Unterseite der Schaumstoffplatte ein Wasseraustritt zu beobachten ist. Das Absenken des Wasserspiegels wurde in mm Wassersäule gemessen. Vor den Versuchen wurden die Schaumstoffplatten 24 Stunden im Trockenschrank bei 60°C konditioniert. Danach wurden die Rohr mittels Silikonkautschuk aufgeklebt.

**Tabelle 1:**

| Versuch | EPS | Beschichtung % bezogen auf EPS | Wasseraufnahme % | Wasserdichtigkeit mm |
|---|---|---|---|---|
| 1 V | A | 0,25 GMS | 5,5 | 25 |
| | | 0,12 Aerosil R972 | | |
| | | 0,13 Zn-Stearat | | |
| 2 V | B | 0,25 GMS | 6,1 | 32 |
| | | 0,12 Aerosil R972 | | |
| | | 0,13 Zn-Stearat | | |
| 3 V | C | 0,25 GMS | 5,8 | 27 |
| | | 0,12 Aerosil R972 | | |
| | | 0,13 Zn-Stearat | | |
| 4 | A | 0,215 GMS | 0,15 | 2 |
| | | 0,12 Aerosil R972 | | |
| | | 0,13 Zn-Stearat | | |
| | | 0,25 Persistol HP | | |
| 5 | B | 0,25 GMS | 0,20 | 2 |
| | | 0,12 Aerosil R972 | | |
| | | 0,13 Zn-Stearat | | |
| | | 0,25 Persistol HP | | |
| 6 V | C | 0,25 GMS | 0,25 | 2 |
| | | 0,12 Aerosil R972 | | |
| | | 0,13 Zn-Stearat | | |
| | | 0,25 Persistol HP | | |

**Tabelle 2**

| Versuch | EPS | Beschichtung % bezogen auf EPS | Wasserdichtigkeit |
|---|---|---|---|
| 7 | A | 0, 05 Paraffinwachs | dicht |
| | | 0,10 Aerosil R 972 | |
| | | 0,34 GTS | |
| | | 0,11 Zn-Stearat | |
| 8 | B | 0,05 Paraffinwachs | dicht |
| | | 0,10 Aerosil R 972 | |
| | | 0,34 GTS | |
| | | 0,11 Zn-Stearat | |
| 9 V | C | 0,05 Paraffinwachs | dicht |
| | | 0,10 Aerosil R 972 | |
| | | 0,34 GTS | |
| | | 0,11 Zn-Stearat | |
| 10 | A | 0,012 Harz N/S | dicht |
| | | 0,10 Aerosil R 972 | |
| | | 0,34 GTS | |
| | | 0,125 Zn-Stearat | |
| 11 | B | 0,012 Harz N/S | dicht |
| | | 0,10 Aerosil R 972 | |
| | | 0,34 GTS | |
| | | 0,125 Zn-Stearat | |
| 12 | C | 0,012 Harz N/S | dicht |
| | | 0,10 Aerosil R 972 | |
| | | 0, 34 GTS | |
| | | 0, 125 Zn-Stearat | |
| GMS: technisches Glycerinmonostearat Aerosil R 972: feinteilige Kieselsäure (Fa. Degussa) Persistol HP: Hydrophobierungsmittel der BASF, wäßrige Emulsion mit 22,8 % Paraffin (Schmp. 52 - 54°C) und 9,6 % Harz aus N-Methylolmelamin und Stearylamid (Schmp. 70°C). Harz N/S: Umsetzungsprodukt aus N-Methylolamin und Stearylamid | | | |

### F. Wasserlagerung

Die Platten aus den Versuchen 1 bis 12 wurden auf ihre Wärmedämmeigenschaften untersucht, wobei jeweils die Wärmeleitfähigkeit vor und nach Wasserlagerung untersucht wurde. Nach der Wasserlagerung wurden die Schaumstoffplatten oberflächlich mit einem Tuch trockengerieben. Die Wärmeleitfähigkeit WLF wurde nach DIN 52612 bei 10°C gemessen. Die Ergebnisse sind in Tabelle 3 zusammengestellt.

| Versuch | EPS | WLF vorher mW/mxK | WLF nachher mW/mxK |
|---|---|---|---|
| 1 V | A | 31,5 | 33,0 |
| 2 V | B | 31,8 | 33,3 |
| 3 V | C | 36,5 | 38,1 |
| 4 | A | 31,5 | 31,6 |
| 5 | B | 31,8 | 31,9 |
| 6 V | C | 36,5 | 36,6 |
| 7 | A | 31,5 | 31,5 |
| 8 | B | 31,8 | 31,8 |
| 9 V | C | 36,5 | 36,5 |
| 10 | A | 31,5 | 31,5 |
| 11 | B | 31,8 | 31,8 |
| 12 V | C | 36,5 | 36,5 |

Die Versuche 4, 5, 7, 8, 10 und 11 sind erfindungsgemäß.

## Patentansprüche

1. Teilchenförmige expandierbare Styrolpolymerisate (EPS-Partikel), die 0,05 bis 25 Gew.-% athermane Partikel in homogener Verteilung enthalten, **dadurch gekennzeichnet, daß** die EPS-Partikel mit 0,001 bis 0,5 Gew.-% eines Hydrophobierungsmittels, welches oberhalb von 10°C schmilzt und eine mittlere Teilchengröße von weniger als 100 µm aufweist, beschichtet sind, wobei das Hydrophobierungsmittel ein Paraffinwachs mit 10 bis 30 C-Atomen in der Kohlenstoffkette, ein Umsetzungsprodukt von einem N-Methylolamin und einem Fettsäurederivat oder ein Polyfluoralkyl(meth)acrylat ist.

2. EPS-Partikel nach Anspruch 1, **dadurch gekennzeichnet, daß** sie als athermane Partikel 0,5 bis 8 Gew.-% Graphit enthalten.

3. EPS-Partikel nach Anspruch 2, **dadurch gekennzeichnet, daß** der Graphit eine Partikelgröße von 2,5 bis 12 µm aufweist.

4. EPS-Partikel nach Anspruch 1, **dadurch gekennzeichnet, daß** sie 0,6 bis 5 Gew.-%, bezogen auf das Polymere, einer organischen Bromverbindung mit einem Bromgehalt von ≥ 70 Gew.-% als Flammschutzmittel und 0,1 bis 1,0 Gew.-%, bezogen auf das Polymere, einer C-C- oder O-O-labilen organischen Verbindung als Flammschutzsynergist enthalten.

5. EPS-Partikel nach Anspruch 1, **dadurch gekennzeichnet, daß** sie mit einer wäßrigen Emulsion des Hydrophobierungsmittels beschichtet sind.

6. EPS-Partikel nach Anspruch 1, **dadurch gekennzeichnet, daß** das Hydrophobierungsmittel an feinteiliger Kieselsäure adsorbiert ist, und die athermane Partikel enthaltenden EPS-Partikel damit beschichtet sind.

7. Verfahren zur Herstellung von Polystyrolschaumstoffen, **dadurch gekennzeichnet, daß** EPS-Partikel nach Anspruch 1 auf eine Dichte von ≤ 35 g/l aufgeschäumt werden.

8. Polystyrolpartikelschaumstoffe einer Dichte von ≤ 35 g/l, **dadurch gekennzeichnet, daß** sie in homogener Verteilung 0,05 bis 25 Gew.-% athermane Partikel und als Beschichtung 0,001 bis 0,5 Gew.-% eines Hydrophobierungsmittels nach Anspruch 1 enthalten, und daß ihre Wärmeleitfähigkeit so weit erniedrigt ist, daß sie den Anforderungen der Wärmeleitklasse 035 (nach DIN 18164), Teil 1, Tab. 4) genügen.

9. Verwendung der Polystyrolpartikelschaumstoffe nach Anspruch 8 zur Wärmedämmung von Gebäuden und Gebäudeteilen.

10. Verwendung der Polystyrolpartikelschaumstoffe nach Anspruch 8 zur thermischen Isolierung von Maschinen und Haushaltsgeräten.

11. Verwendung der Polystyrolpartikelschaumstoffe nach Anspruch 8 als Verpackungsmaterialien.

## Claims

1. A particulate expandable styrene polymer (EPS particles) which contains from 0.05 to 25% by weight of homogeneously distributed athermanous particles, wherein the EPS particles are coated with from 0.001 to 0.5% by weight of a hydrophobicizing agent which melts at above 10°C and has a mean particle size of less than 100 µm, where the hydrophobicizing agent is a paraffin wax having from 10 to 30 carbon atoms in the carbon chain, a reaction product of an N-methylolamine and a fatty acid derivative or a polyfluoroalkyl (meth)acrylate.

2. EPS particles as claimed in claim 1 which contain from 0.5 to 8% by weight of graphite as athermanous particles.

3. EPS particles as claimed in claim 2, wherein the graphite has a particle size of from 2.5 to 12 µm.

4. EPS particles as claimed in claim 1 which comprise from 0.6 to 5% by weight, based on the polymer, of an organic bromine compound having a bromine content of ≥ 70% by weight as flame retardant and from 0.1 to 1.0% by weight, based on the polymer, of a C-C- or O-O-labile organic compound as flame retardant synergist.

5. EPS particles as claimed in claim 1 which are coated with an aqueous emulsion of the hydrophobicizing agent.

6. EPS particles as claimed in claim 1, wherein the hydrophobicizing agent is adsorbed on finely divided silica and the EPS particles comprising athermanous particles are coated with this.

7. A process for producing polystyrene foams, which comprises foaming EPS particles as claimed in claim 1 to a density of ≤ 35 g/l.

8. An expanded polystyrene foam having a density of ≤ 35 g/l, containing from 0.05 to 25% by weight of homogeneously distributed athermanous particles and from 0.001 to 0.5% by weight of a hydrophobicizing agent as claimed in claim 1 as coating and having a thermal conductivity which is lowered sufficiently for it to meet the requirements of thermal conductivity class 035 (in accordance with DIN 18164, Part 1, Table 4).

9. The use of the expanded polystyrene foams as claimed in claim 8 for the thermal insulation of buildings and parts of buildings.

10. The use of the expanded polystyrene foams as claimed in claim 8 for the thermal insulation of machines and household appliances.

11. The use of the expanded polystyrene foams as claimed in claim 8 as packaging materials.

## Revendications

1. Polymères de styrène expansibles sous forme de particules (particules d'EPS), qui contiennent 0,05 à 25% en poids de particules athermanes en distribution homogène, **caractérisés en ce que** les particules d'EPS sont revêtues de 0,001 à 0,5% en poids d'un agent rendant hydrophobe qui fond au-dessus de 10°C et présente une taille moyenne de particule inférieure à 100 µm, l'agent rendant hydrophobe étant une cire de paraffine comportant 10 à 30 atomes de C dans la chaîne carbonée, un produit de la réaction d'une N-méthylolamine et d'un dérivé d'acide gras ou un (méth)acrylate de polyfluoroalkyle.

2. Particules d'EPS suivant la revendication 1, **caractérisées en ce qu'**elles contiennent 0,5 à 8% en poids de graphite comme particules athermanes.

3. Particules d'EPS suivant la revendication 2, **caractérisées en ce que** le graphite présente une taille de particule de 2,5 à 12 µm.

4. Particules d'EPS suivant la revendication 1, **caractérisées en ce qu'**elles contiennent 0,6 à 5% en poids, par rapport au polymère, d'un composé organique du brome ayant une teneur en brome de ≥70% en poids, comme agent ignifuge, et 0,1 à 1,0% en poids, par rapport au polymère, d'un composé organique labile en C-C ou O-O, comme agent ignifuge synergique.

5. Particules d'EPS suivant la revendication 1, **caractérisées en ce qu'**elles sont revêtues d'une émulsion aqueuse de l'agent rendant hydrophobe.

6. Particules d'EPS suivant la revendication 1, **caractérisées en ce que** l'agent rendant hydrophobe est adsorbé sur de l'acide silicique finement divisé et **en ce que** les particules d'EPS contenant des particules athermanes en sont revêtues.

7. Procédé de préparation de mousses de polystyrène, **caractérisé en ce que** des particules d'EPS suivant la revendication 1 sont amenées à mousser à une densité de ≤35 g/l.

8. Mousses de particules de polystyrène d'une densité ≤35 g/l, **caractérisées en ce qu'**elles contiennent en distribution homogène 0,05 à 25% en poids de particules athermanes et, comme revêtement, 0,001 à 0,5% en poids d'un agent rendant hydrophobe, conformément à la revendication 1, et **en ce que** leur conductibilité thermique est abaissée suffisamment largement pour qu'elles satisfassent aux exigences de la classe de conductibilité thermique 035 (selon la norme DIN 18164), partie 1, tab.4).

9. Utilisation des mousses de particules de polystyrène suivant la revendication 8, pour le calorifugeage de bâtiments et de parties de bâtiment.

10. Utilisation des mousses de particules de polystyrène suivant la revendication 8, pour l'isolation thermique de machines et d'appareils ménagers.

11. Utilisation des mousses de particules de polystyrène suivant la revendication 8, comme matériaux d'emballage.
